# EUROPEAN PATENT APPLICATION

(11) **EP 4 715 706 A1**
(43) Date of publication of application: **25.03.2026**
(21) Application number: 25202384.1
(22) Date of filing: 16.09.2025
(51) Int. Cl.: G06Q 10/10, G06Q 30/0207

(54) **INFORMATION PROCESSING SYSTEM, INFORMATION PROCESSING METHOD, AND PROGRAM**

(30) Priority: 24.09.2024 JP 2024164764
(71) Applicant: Rakuten Group, Inc., Setagaya-ku Tokyo 158-0094 (JP)
(72) Inventor: Ali, Tuba, Minato-ku, Tokyo, 108-0075 (JP)
(74) Representative: Hoffmann Eitle

(57) **Abstract**

An information processing system includes at least one memory configured to store a program and at least one processor configured to execute a process based on the program. The at least one processor is configured to execute acquiring notifications to be summarized in response to an instruction from a user, acquiring a summary of the notifications, displaying the summary of the notifications, and processing, after displaying the summary of the notifications, the notifications in bulk in response to an instruction from the user.

## Description

### BACKGROUND

### 1. Field

The present disclosure relates to an information processing system, an information processing method, and a program.

### 2. Description of Related Art

Japanese Laid-Open Patent Publication No. 2022-73055 discloses a product sales system as an example of an information processing system. When a reserved product becomes available, the product sales system notifies the user of a first message including an element for canceling the reservation.

However, in such an information processing system, if a large number of notifications are sent to the user, the user may have to spend time checking the notifications. This could reduce usability.

### SUMMARY

This Summary is provided to introduce a selection of concepts in a simplified form that are further described below in the Detailed Description. This Summary is not intended to identify key characteristics or essential characteristics of the claimed subject matter, nor is it intended to be used as an aid in determining the scope of the claimed subject matter.

An information processing system according to an aspect of the present disclosure includes at least one memory configured to store a program and at least one processor configured to execute a process based on the program. The at least one processor is configured to execute acquiring notifications to be summarized in response to an acquisition instruction that has been input by a user via a terminal device, acquiring a summary of the notifications, displaying the summary on the terminal device, and processing, after displaying the summary on the terminal device, the notifications in bulk in response to a bulk processing instruction that has been input by the user via the terminal device.

An information processing method according to an aspect of the present disclosure includes acquiring, by at least one processor, notifications to be summarized in response to an acquisition instruction that has been input by a user via a terminal device, acquiring, by the at least one processor, a summary of the notifications, displaying, by the at least one processor, the summary on the terminal device, and processing, after displaying the summary on the terminal device, by the at least one processor, the notifications in bulk in response to a bulk processing instruction that has been input by the user via the terminal device.

A program according to an aspect of the present disclosure causes at least one processor to execute acquiring notifications to be summarized in response to an acquisition instruction that has been input by a user via a terminal device, acquiring a summary of the notifications, displaying the summary on the terminal device, and processing, after displaying the summary on the terminal device, the notifications in bulk in response to a bulk processing instruction that has been input by the user via the terminal device.

Other features and aspects will be apparent from the following detailed description, the drawings, and the claims.

### BRIEF DESCRIPTION OF THE DRAWINGS

Fig. 1 is a diagram illustrating an overall configuration of an information processing system according to a first embodiment.
Fig. 2 is a table illustrating a notification management database in the first embodiment.
Fig. 3 is an illustration of the display content provided by the display device of the first embodiment.
Fig. 4 is an illustration of the display content provided by the display device of the first embodiment.
Fig. 5 is an illustration of the display content provided by the display device of the first embodiment.
Fig. 6 is a flowchart illustrating a first notification management process of the first embodiment.
Fig. 7 is a flowchart showing a notification summarization control process of the first embodiment.
Fig. 8 is a flowchart illustrating a second notification management process of the first embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

An information processing system, an information processing method, and a program according to a first embodiment will now be described.

### Configuration of Information Processing System 10

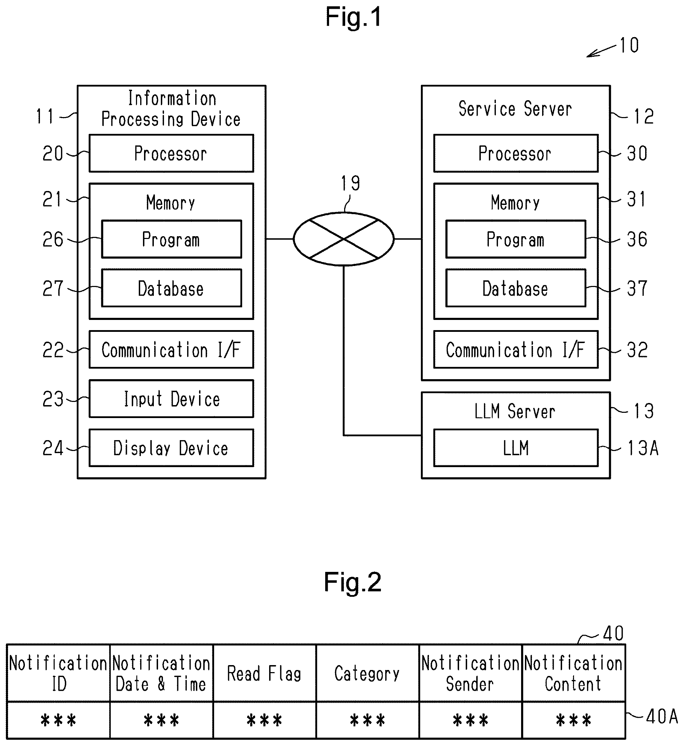

Referring to Fig. 1, an information processing system 10 is configured to provide information to a user. In particular, the information processing system 10 is configured to provide various services to a user via an application (hereinafter simply referred to as an app). The information processing system 10 is configured to provide various notifications to a user via the app.

The information processing system 10 includes an information processing device 11. The information processing device 11 may be a terminal device used by a user. The information processing device 11 may be a mobile terminal device that can be carried by a user. A user uses various services.

The information processing system 10 may include a service server 12. The service server 12 is configured to provide various services to a user. The service server 12 is managed by an operator of the information processing system 10.

The information processing system 10 may include a large language model (LLM) server 13. The LLM server 13 includes a LLM 13A. The LLM 13A is built using large-scale data and deep learning techniques. The LLM server 15A functions to control various texts using generative artificial intelligence (AI). The LLM server 15A functions to control various images using generative AI. The LLM server 15A includes various learning models of generative AI.

For example, the LLM server 13 includes a function of summarizing input texts. The LLM server 13 includes a summarization model using generative Al. The summarization model is a learning model related to summarization of texts.

The information processing device 11, the service server 12, and the LLM server 13 may communicate with each other via a network 19. Hereinafter, the communication between the information processing device 11, the service server 12, and the LLM server 13 via the network 19 will not be described.

### Configuration of Information Processing Device 11

The information processing device 11 may include at least one computer. The information processing device 11 includes at least one processor 20 and at least one memory 21. The information processing device 11 includes a communication interface 22, an input device 23, and a display device 24. In the diagram, the interface is indicated as I/F.

The processor 20 is configured to control the information processing device 11. The processor 20 is configured to execute processing based on a program 26 stored in the memory 21. The processor 20 may be a central processing unit (CPU), a graphic processing unit (GPU), or a neural network processing unit (NPU). The processor 20 may include, or may itself be, an integrated circuit, such as an application-specific integrated circuit (ASIC). The processor 20 may be any combination thereof.

The memory 21 is configured to store the program 26. The memory 21 is a non-transitory computer-readable medium that stores the program 26, and may include a transitory computer-readable medium. The program 26 may include a dedicated app for using the information processing system 10. The memory 21 is configured to store a database 27.

The communication interface 22 is implemented as hardware, software, or a combination thereof. The communication interface 22 sends and receives data to and from the service server 12.

The input device 23 is configured to input data in response to a user's operation. The input device 23 may be a touch panel integrated with the display device 24. The input device 23 may be a pointing device having operation buttons. The display device 24 displays information in accordance with output instructions from the processor 20.

### Configuration of Service Server 12

The service server 12 may be implemented by at least one computer. The service server 12 includes at least one processor 30 and at least one memory 31. The service server 12 includes a communication interface 32.

The memory 31 is configured to store the program 36. The memory 31 is a non-transitory computer-readable medium that stores the program 36, and may include a transitory computer-readable medium. The memory 31 is configured to store a database 37.

The communication interface 32 sends and receives data to and from the information processing device 11. The service server 12 may include an input device that receives data, or may include a display device that displays information.

The service server 12 has the same configuration as the information processing device 11. Thus, the processor 30, the memory 31, and the communication interface 32 of the service server 12 will not be described.

The service server 12 may provide the user with, for example, a predetermined service that allows for a transaction with a transaction target. The predetermined service may include at least one of a payment service, an electronic commerce service, a travel reservation service, a restaurant reservation service, a communication service, a video streaming service, and an electronic book distribution service. Examples of the transaction target include a product and a service. Examples of the transaction include purchase, selling, lending, use, and reservation.

The service server 12 may manage user attributes of a user who uses the information processing system 10. The user attributes may include segment data for the user. The user attributes may include the age, gender, and address of the user.

In the service server 12, the processor 30 stores each user attribute and a user identifier in the memory 31 in association with each other. This allows the processor 30 to manage the user attribute in association with the user identifier. The reward value possessed by the user may be included in the user attributes.

The service server 12 may manage an activity history of a user who uses the information processing system 10. The activity history of the user may include at least one of a browsing history, a transaction history, and a search history of the user. The service server 12 is configured to acquire the activity history of the user by communicating with the information processing device 11 for which user authentication has been successfully performed.

In the service server 12, the processor 30 stores the user identifier and the user activity history in the memory 31 in association with each other. This allows the processor 30 to manage the user activity history in association with the user identifier.

The service server 12 may have a reward granting function. A reward may be a point available in the predetermined service. A reward may be a point that can be acquired in the predetermined service. A reward value may be the number of points. A reward may be available across multiple services managed by the same manager or across multiple services each managed by a different manager. A reward may be an incentive for the user.

In the service server 12, the processor 30 stores the user identifier and the reward value possessed by the user in the memory 31 in association with each other. This allows the processor 30 to manage the reward value possessed by the user in association with the user identifier.

The service server 12 has a notification function of issuing various notifications to the information processing device 11. The notifications include a message to the user. The notifications include a notification text, and may include, for example, a notification image. The notifications may include notification content related to the predetermined service.

In the service server 12, the processor 30 sends various notifications to the information processing device 11, which serves as a recipient, in response to an instruction from the information provider, which serves as a sender. This allows the processor 30 to provide the notifications to the user. The information provider may be the provider of the predetermined service.

The LLM server 13 includes the LLM 13A. The LLM server 13 has the same configuration as the service server 12. Accordingly, the processor, the memory, and the communication interface of the LLM server 13 will not be described.

### Data Configuration of Database 27

As shown in Fig. 2, the memory 21 of the information processing device 11 stores a notification management database 40 as the database 27. The database 27 includes the notification management database 40. The notification management database 40 is used to manage notifications sent to users.

The notification management database 40 includes at least one dataset 40A. In the dataset 40A, a notification identifier is associated with a notification date and time, a read flag, a category, a notification sender, and notification content. In the diagram, identifiers are indicated as IDs. The notification date and time, the category, the notification sender, and the notification content are data included in a notification transmitted from the service server 12 to the information processing device 11, and may be assigned by the information provider.

The notification identifier is data used to identify a notification. The notification date and time indicates when the notification was sent. The read flag indicates whether the notification has been read. The read flag indicates whether the notification has been unread or read. Validity data is set to the read flag when the notification is read.

The category indicates a notification category. Examples of the category may include at least one of food, lifestyle, sports, shopping, finance, and insurance. The notification sender indicates the information provider that has sent the notification. The notification content is included in the notification. The notification content includes a notification text, and may include a notification image.

### App Display Screen

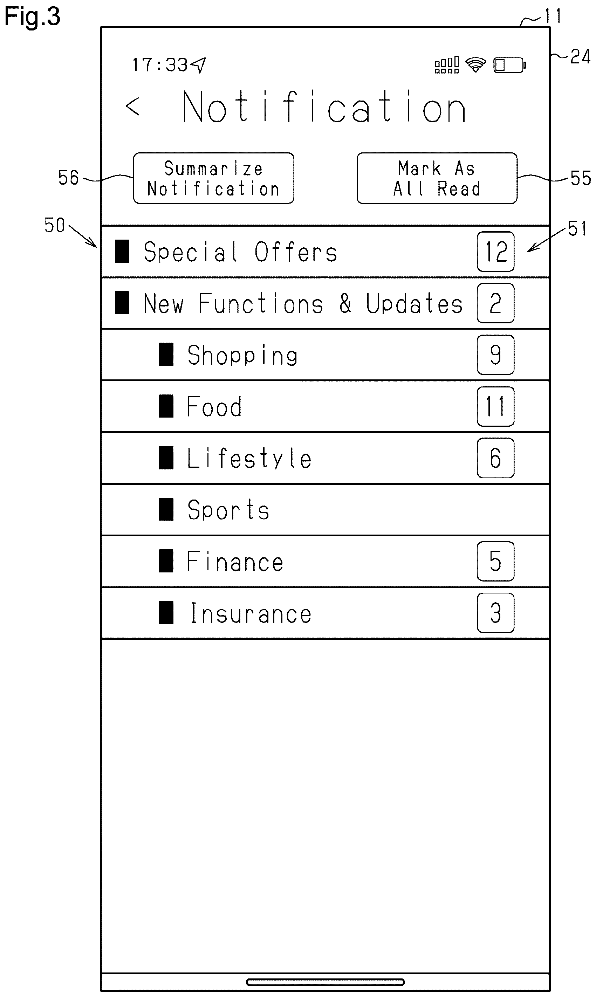

The display screen displayed on the display device 24 of the information processing device 11 will now be described with reference to Figs. 3 to 5.

As shown in Fig. 3, the display device 24 displays an image related to a notification with the app launched. The display device 24 displays a category list 50 related to notifications. The category list 50 includes notification categories related to campaign, such as special offers. Examples of the category list 50 include the categories of notifications related to new functions or updates of the app. The category list 50 includes categories such as shopping, food, lifestyle, sports, finance, and insurance.

The category list 50 displays an unread-count image 51, which indicates the number of unread notifications, at a position corresponding to each of the categories. When the area corresponding to a category is designated by the user, at least one notification assigned to the designated category is displayed. As a result, the unread notification assigned to the designated category is marked as read so that the unread-count image 51 is deleted. The unread notification refers to a notification that has been sent from the service server 12 to the information processing device 11 and remains unopened by the user.

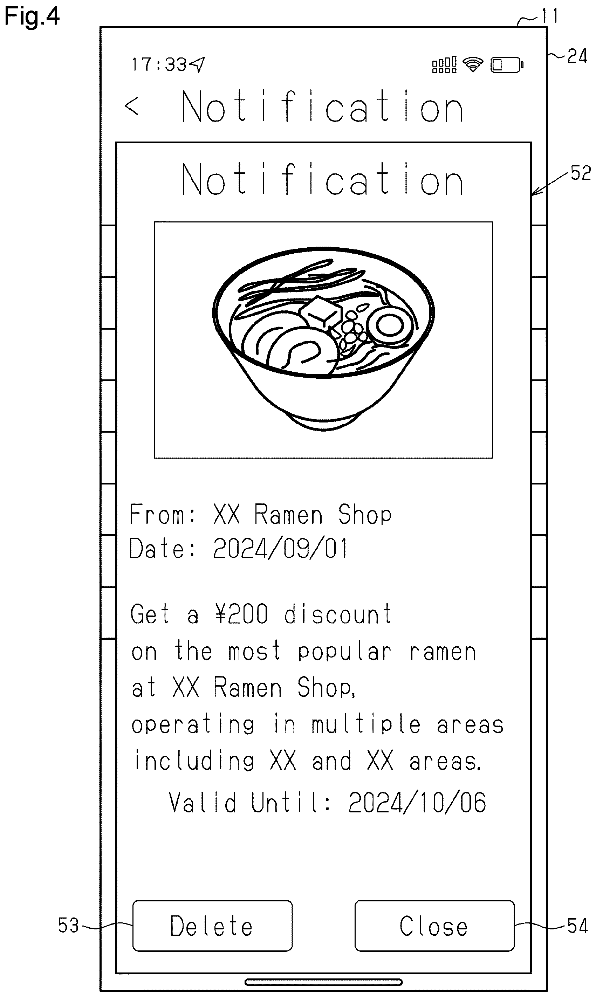

As shown in Fig. 4, when a predetermined notification categorized as food is selected, a notification content 52 is displayed. The notification content 52 may include a notification text and a notification image. The notification text includes a sentence indicating that a discount coupon for a transaction target is given as a reward. The notification text includes a sentence indicating a reward value of 200-yen discount. The notification text includes a sentence indicating the expiration date of the reward. The notification image may include an image indicating a transaction target eligible for a discount coupon. A reward is given to the user using such a notification.

The notification content 52 displays a delete button 53 and a close button 54. The delete button 53 is used to delete and close the displayed notification in response to an instruction from the user. The close button 54 is used to close the displayed notification in response to an instruction from the user without deleting it.

As shown in Fig. 3, the display device 24 displays a mark-all-as-read button 55 when the app is running. The mark-all-as-read button 55 is used to mark, as read, all the notifications received by the information processing device 11. When the mark-all-as-read button 55 is operated by the user, all the notifications received by the information processing device 11 are marked as read regardless of the category.

The display device 24 displays a notification summarizing button 56 when the app is running. The notification summarizing button 56 is used to display a summary of notifications that satisfy an acquisition condition is satisfied, from the notifications received by the information processing device 11. When the notification summarizing button 56 is operated by the user, the summary of the notifications that satisfy the acquisition condition is displayed.

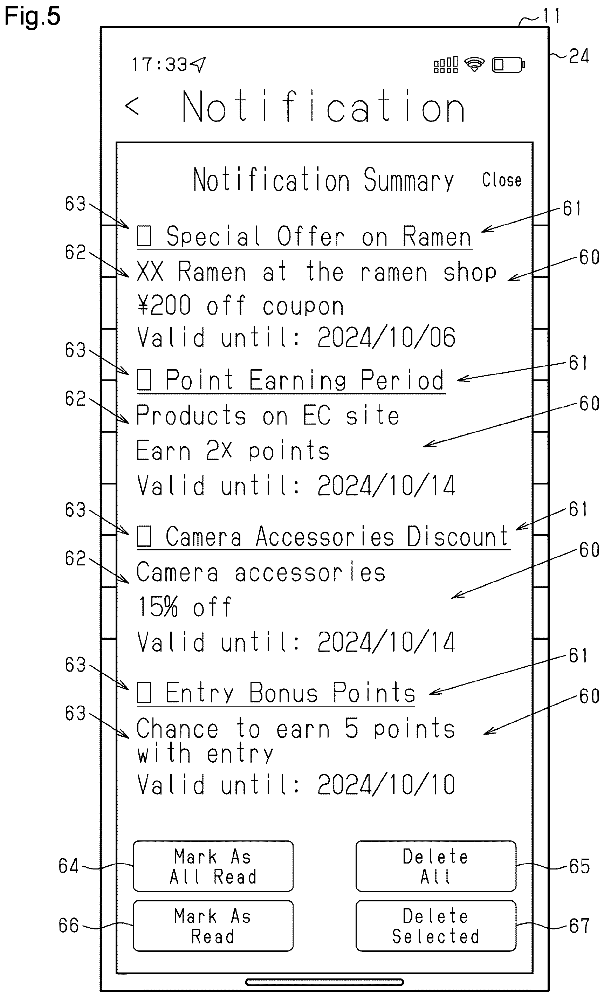

As shown in Fig. 5, when the notification summarizing button 56 is operated by the user, multiple notification summary images 60 are displayed. In the present embodiment, four notification summary images 60 for four notifications are displayed, but is not limited thereto.

The notification summary images 60 each include a title 61 related to the notification. The notification summary images 60 each include a summary text 62 related to the notification. The summary text 62 includes sentences indicating a reward to the user. Specifically, the summary text 62 includes a reward value to be given to the user. The summary text 62 includes the expiration date of the reward given to the user. The notification summary images 60 are displayed from top to bottom in an order that is based on the reward value given to the user and the expiration date of the reward.

The notification summary images 60 each display a checkbox 63. When the checkbox 63 is designated by the user, a process corresponding to the designated notification becomes executable.

When the notification summarizing button 56 is operated by the user, a mark-all-as-read button 64, a delete-all button 65, a mark-as-read button 66, and a delete-selected button 67 are displayed on the display device 24. The mark-all-as-read button 64 is used to mark, as read, all the summarized notifications in response to an instruction from the user. The delete-all button 65 is used to delete all the summarized notifications in response to an instruction from the user. The mark-as-read button 66 is used to mark the notification designated in a checkbox 63 by the user, from the summarized notifications, as read. The delete-selected button 67 is used to delete the notification designated in a checkbox 63 by the user, from the notifications to be summarized.

The title 61 is assigned to the linked content of the notification. When the title 61 is designated by the user, as shown in Fig. 4, the notification content 52, which is the link target, is displayed.

### First Notification Management Process

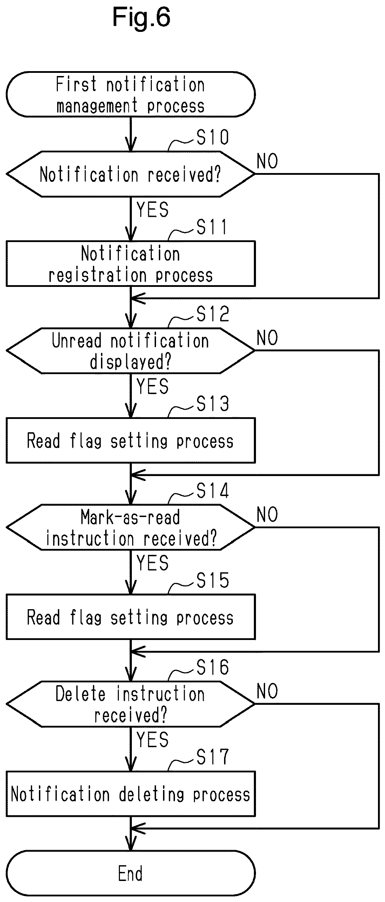

A first notification management process will now be described with reference to Fig. 6. The first notification management process is executed by the processor 20 at predetermined cycles.

As shown in Fig. 6, in step S10, the processor 20 determines whether a notification has been received from the service server 12. In this process, when determining that no notification has been received from the service server 12, the processor 20 shifts the process to step S12. When determining that a notification has been received from the service server 12, the processor 20 shifts the process to step S11.

In step S11, the processor 20 executes a notification registration process. In this process, the processor 20 generates a notification identifier. The processor 20 acquires the notification date and time, category, notification sender, and notification content from the received notification. The processor 20 registers the dataset 40A, including the notification identifier, notification date and time, category, notification sender, and notification content in the notification management database 40. In this case, the processor 20 registers, in the notification management database 40, the dataset 40A for which no read flag is set.

The processor 20 refers to the dataset 40A stored in the notification management database 40 to calculate, for each category, the number of unread notifications for which no read flag is set and store the number of unread notifications for each category in the memory 21. This allows the processor 20 to display the number of unread notifications for each category on the display device 24.

The processor 20 calculates the frequency at which the user receives notifications, based on the received notification. The processor 20 stores the calculated frequency in the memory 21. The notification frequency indicates the number of notifications that have been issued for a predetermined period. The predetermined period may be, for example, one week, one month, three months, half a year, or one year. The notification frequency may indicate the number of notifications in each of multiple predetermined periods. The notification frequency may be assigned for each notification category.

In step S12, the processor 20 determines whether an unread notification with no read flag has been displayed on the display device 24 in response to an instruction from the user. When determining that no unread notification has been displayed, the processor 20 shifts the process to step S14. When determining that an unread notification has been displayed, the processor 20 shifts the process to step S13.

In step S13, the processor 20 executes a read flag setting process. In this process, the processor 20 sets a read flag corresponding to the unread notification displayed on the display device 24. In this manner, the processor 20 displays the unread notification on the display device 24, thereby executing a process that marks the unread notification as read.

In step S14, the processor 20 determines whether a mark-as-read instruction has been input in response to an instruction from the user. In this process, in a case which a mark-as-read instruction for all the notifications has been input in response to an instruction from the user, the processor 20 determines that the mark-as-read instruction has been input in response to the instruction. In a case in which a mark-as-read instruction for the notification designated by an instruction from the user has been input, the processor 20 determines that the mark-as-read instruction has been input in response to the instruction from the user.

When determining that no mark-as-read instruction has been input, the processor 20 shifts the process to step S16. When determining that a mark-as-read instruction has been input, the processor 20 shifts the process to step S15.

In step S15, the processor 20 executes a read flag setting process. In this process, in the same manner as step S13, the processor 20 sets the read flag corresponding to the notification designated by the instruction from the user.

Specifically, in a case in which a mark-as-read instruction for all the notifications has been input in response to an instruction from the user, the processor 20 sets a read flag corresponding to all the notifications. In this manner, the processor 20 executes a process that marks all notifications as read in bulk in response to an instruction from the user.

In a case in which the mark-as-read instruction for the notification designated by an instruction from the user has been input, the processor 20 sets a read flag corresponding to that notification. In this manner, the processor 20 executes a process that marks the notification designated by an instruction from the user as read.

In step S16, the processor 20 determines whether a delete instruction has been input. In this process, in a case in which a delete instruction for all the notifications has been input in response to an instruction from the user, the processor 20 determines that the delete instruction has been input in response to the instruction. In a case in which a delete instruction for the notification designated by an instruction from the user has been input, the processor 20 determines that the delete instruction has been input in response to the instruction from the user.

When determining that no delete instruction has been input, the processor 20 ends the first notification management process. When determining that a delete instruction has been input, the processor 20 shifts the process to step S17.

In step S17, the processor 20 executes a notification deletion process. In this process, the processor 20 deletes, from the notification management database 40, the dataset 40A corresponding to the notification designated by an instruction from the user.

Specifically, in a case in which a delete instruction for all the notifications has been input by an instruction from the user, the processor 20 deletes the dataset 40A corresponding to all the notifications from the notification management database 40. In this manner, the processor 20 executes a process that deletes all the notifications in bulk in response to an instruction from the user.

In a case in which a delete instruction for the notification designated by an instruction from the user has been input, the processor 20 deletes the dataset 40A corresponding to that notification from the notification management database 40. In this manner, the processor 20 executes a process that deletes the notification as designated by an instruction from the user.

### Notification Summarization Control Process

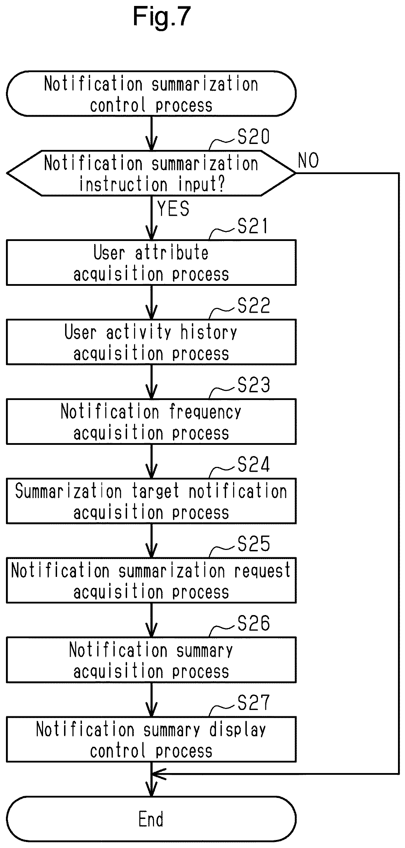

A notification summarization control process will now be described with reference to Fig. 7. The notification summarization control process is executed by the processor 20 at predetermined cycles.

As shown in Fig. 7, in step S20, the processor 20 determines whether a notification summarization instruction has been input by an instruction from the user. The notification summarization instruction is issued to summarize multiple notifications. When determining that the notification summarization instruction has not been input in response to an instruction from the user, the processor 20 ends the notification summarization control process. When determining that the notification summarization instruction has been input in response to an instruction from the user, the processor 20 shifts the process to step S21.

In step S21, the processor 20 executes a user attribute acquisition process. In this process, the processor 20 acquires a user attribute. The processor 20 may acquire a user attribute through communication with the service server 12.

Specifically, the processor 20 sends a user attribute request to the service server 12. The user attribute request includes a user identifier. In the service server 12, the processor 30 reads the user attribute corresponding to the user identifier included in the received user attribute request from the memory 31, and sends the user attribute to the information processing device 11. The processor 20 receives the user attribute from the service server 12. Thus, the processor 20 acquires the user attribute.

In step S22, the processor 20 executes a user activity history acquisition process. In this process, the processor 20 acquires the activity history of the user. The processor 20 may acquire the activity history of the user through communication with the service server 12.

Specifically, the processor 20 sends an activity history request to the service server 12. The activity history request includes a user identifier. In the service server 12, the processor 30 reads the activity history of the user corresponding to the user identifier included in the received activity history request from the memory 31, and sends the activity history of the user to the information processing device 11. The processor 20 receives the activity history of the user from the service server 12. Thus, the processor 20 acquires the activity history of the user.

In step S23, the processor 20 executes a notification frequency acquisition process. In this process, the processor 20 acquires the frequency of issuing notifications to the user from the memory 21. Specifically, the processor 20 may acquire, from the memory 21, the frequency of issuing notifications to the user assigned for each notification category

In step S24, the processor 20 executes a summarization target notification acquisition process. In this process, the processor 20 acquires multiple notifications to be summarized. That is, the processor 20 acquires multiple notifications to be summarized in response to an acquisition instruction that has been input by the user via the information processing device 11.

In particular, the processor 20 may acquire notifications to be summarized, based on the acquisition condition stored in the memory 21. The acquisition condition is used to acquire notifications to be summarized. The acquisition condition may include at least one of the condition that there is an unread notification, the upper limit number of notifications to be acquired as a summarization target, and the priority of notifications.

Specifically, the processor 20 acquires notifications to be summarized from unread notifications in accordance with the priority. The processor 20 may acquire up to a predetermined upper limit number of notifications as the notifications to be summarized from the unread notifications in descending order of priority level in accordance with the priority. That is, the processor 20 may be configured to acquire notifications in accordance with at least one priority criterion.

The priority may be based on the user attribute acquired in step S21. In this manner, the processor 20 may acquire notifications with a priority based on the user attribute.

The processor 20 may acquire notifications to be summarized with more priority given to a notification having relatively high relevance to the user than to a notification having relatively low relevance to the user based on the user attribute. For example, when the user's address is included in a first region, the processor 20 may acquire notifications to be summarized with more priority given to a notification corresponding to the first region than to a notification corresponding to a second region, which is different from the first region. For example, when the user possesses a relatively large reward value, the processor 20 may acquire notifications to be summarized with more priority given to a notification regarding a relatively expensive transaction object than to a notification regarding a relatively inexpensive transaction object.

The processor 20 may acquire notifications to be summarized with more priority given to a notification assigned to a category having relatively high relevance to the user than to a notification assigned to a category having relatively low relevance to the user based on the user attribute. For example, in the case of a relatively young age group such as their twenties, the processor 20 may acquire notifications to be summarized with more priority given to a notification to which shopping or food is assigned as a category than to a notification to which finance or insurance is assigned as a category.

The priority may be based on the user activity history acquired in step S22. In this manner, the processor 20 may acquire notifications with a priority based on the user activity history.

The processor 20 may acquire notifications to be summarized with more priority given to a notification having relatively high relevance to the user than to a notification having relatively low relevance to the user based on the user activity history. For example, the processor 20 may acquire notifications to be summarized with more priority given to a notification having a relatively large number of views by the user than to a notification having a relatively small number of views by the user.

The processor 20 may acquire notifications to be summarized with more priority given to a notification assigned to a category having relatively high relevance to the user than to a notification assigned to a category having relatively low relevance to the user based on the user activity history. That is, the processor 20 may acquire notifications to be summarized with more priority given to a notification assigned to a category having a relatively high activity history of the user than to a notification assigned to a category having a relatively low activity history of the user based on the user activity history. For example, the processor 20 may acquire notifications to be summarized with more priority given to a notification assigned to a category in which the user's purchase amount is relatively high, than to a notification assigned to a category in which the user's purchase amount is relatively low.

When a first service is used more frequently than a second service, the processor 20 may acquire notifications with more priority given to a notification related to the first service than to a notification related to the second service based on the user activity history. For example, the processor 20 may acquire notifications to be summarized with more priority given to a notification assigned to a service with a relatively large number of views by the user than to a notification assigned to a service having a relatively small number of views by the user.

The priority may be based on the frequency of notifications to the user acquired in step S23. In this manner, the processor 20 may acquire notifications to be summarized in accordance with a priority that is based on the frequency of notifications to the user.

In particular, the processor 20 may acquire notifications to be summarized with more priority given to a notification sent to the user at a relatively high frequency than to a notification sent to the user at a relatively low frequency. The processor 20 may acquire notifications to be summarized with more priority given to a notification sent from the notification sender to the user at a relatively high frequency than to a notification sent from the notification sender to the user at a relatively low frequency. In particular, the processor 20 may acquire notifications to be summarized with more priority given to a notification assigned to a category in which the frequency of notifications to the user is relatively high than to a notification assigned to a category in which the frequency of notifications to the user is relatively low.

The priority (i.e., priority criterion) may be based on the notification date and time. The processor 20 may acquire notifications to be summarized in accordance with a priority that is based on the notification date and time. In particular, the processor 20 acquires notifications to be summarized with more priority given to a notification issued at a relatively new date and time than to a notification issued at a relatively old date and time.

The priority (i.e., priority criterion) may be related to a reward for the user. In particular, the processor 20 may acquire notifications to be summarized with priority given to a notification that includes data related to a reward for the user. The processor 20 may acquire notifications to be summarized with priority given to a notification in which the value of a reward provided to the user is relatively high.

The processor 20 may acquire notifications to be summarized with priority given to a notification including data related to a reward for the user that has not expired. The processor 20 may acquire notifications to be summarized with priority given to a notification that does not include data related to a reward for the user that has expired. The processor 20 may acquire notifications to be summarized with priority given to a notification including data related to a reward for the user that has not expired and has a relatively short remaining validity period.

The processor 20 may acquire notifications to be summarized with priority given to a notification including data related to a reward for the user that has no expiration date. The processor 20 may acquire notifications to be summarized with more priority given to a notification including data related to a reward for the user that has no expiration date than to a notification including data related to a reward for the user that has not expired.

Thus, the priority may include multiple priority criteria. The processor 20 refers to the notification content in accordance with the priority to determine whether the notification content satisfies each of the priority criteria. The processor 20 may calculate, as the priority level for a notification, the total number of priority criteria satisfied by the notification content. That is, the processor 20 may acquire notifications in descending order of priority level and calculate the priority level based on the number of satisfied ones of the priority criteria. Alternatively, a coefficient may be associated with each of the priority criteria. For example, the priority criterion under which a reward that has not expired is provided to the user may have a larger coefficient than the priority criterion based on the recency of the notification date and time. The processor 20 may acquire, for each satisfied priority criterion, the coefficient associated with the priority criterion and calculate the aggregation of the acquired coefficients as the priority level for the notification. That is, the processor 20 may acquire notifications in descending order of priority level and calculate the priority level based on the number of satisfied ones of the priority criteria. Such control optimizes the priority of multiple notifications to be summarized.

In step S25, the processor 20 executes a notification summarizing request process. In this process, the processor 20 generates a summarizing prompt. The summarizing prompt includes multiple notifications acquired in step S24 and an instruction for generating a summary of the notifications. The summarizing prompt may include an instruction for generating, as a summary, a title for each of the notifications. The summarizing prompt may include an instruction for generating a target for a reward given to the user, the reward value, and the expiration date as a summary of multiple notifications. The summarizing prompt may include an instruction for generating, for each of the notifications, link target associated with the notification as a summary. The processor 20 sends the generated summarizing prompt to the LLM server 13. Thus, the processor 20 inputs the summarizing prompt into the LLM 13A.

In step S26, the processor 20 executes a notification summary acquisition process. In this process, the processor 20 acquires a summary of multiple notifications from the LLM server 13 that has sent the summarizing prompt. That is, the processor 20 acquires a summary of the notifications from the LLM 13A that has input the summarizing prompt.

In this manner, the processor 20 acquires, from the LLM 13A, a summary of the notifications generated by the LLM 13A by inputting the summarizing prompt to the LLM 13A in response to the notification summarization instruction. That is, the processor 20 acquires a summary of the notifications acquired based on the acquisition condition in response to the instruction from the user.

In step S27, the processor 20 executes a notification summary display control process. In this process, the processor 20 displays a summary of multiple notifications on the display device 24. Specifically, the processor 20 displays a summary text 62 for each of the notifications on the display device 24. The processor 20 may display an image for each of the notifications on the display device 24. The processor 20 may display link target associated with each of the notifications on the display device 24.

### Second Notification Management Process

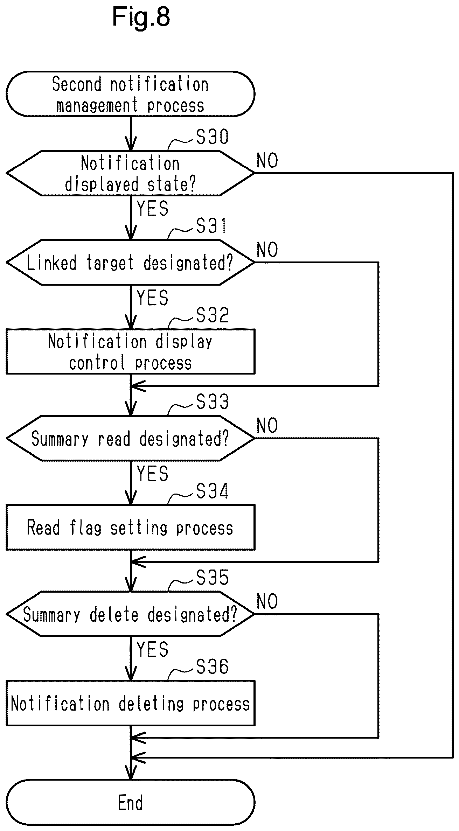

A second notification management process will now be described with reference to Fig. 8. The second notification management process is executed by the processor 20 at predetermined cycles. In the second notification management process, notifications are managed with a summary of multiple notifications displayed on the display device 24.

As shown in Fig. 8, in step S30, the processor 20 determines whether the display device 24 is displaying a summary (i.e., a summary displayed state). In the summary displayed state, a summary of multiple notifications is displayed. When determining that no summary is being displayed, the processor 20 ends the second notification management process. When determining that a summary is being displayed, the processor 20 shifts the process to step S31.

In step S31, the processor 20 determines whether the link target displayed on the display device 24 has been designated by the user. When determining that no link target has been designated by the user, the processor 20 shifts the process to step S33. When determining that the link target has been designated by the user, the processor 20 shifts the process to step S32.

In step S32, the processor 20 executes a notification display control process. In this process, the processor 20 reads the link target designated by the user. The processor 20 displays a notification corresponding to the link target on the display device 24. In this manner, the processor 20 displays, on the display device 24, a notification indicating the link target in response to the designation of the link target by the user.

In step S33, the processor 20 determines whether the user has performed summary read designation. The summary read designation includes marking, as read, the notification designated by the user from summarized notifications. The summary read designation includes marking, as read, all the summarized notifications.

When determining that the summary read designation has not been performed by the user, the processor 20 shifts the process to step S35. When determining that the summary read designation has been performed by the user, the processor 20 shifts the process to step S34.

In step S34, the processor 20 executes a read flag setting process. In this process, the processor 20 sets a read flag corresponding to the notification for which the summary read designation has been performed by the user, from the summarized notifications. Thus, after displaying a summary of the notifications on the display device 24, the processor 20 executes a process that marks the notifications as read in bulk in response to the user's instruction.

In step S35, the processor 20 determines whether a summary deletion designation has been performed by the user. The summary deletion designation includes deleting the notification designated by the user from the summarized notifications. The summary deletion designation includes deleting all the summarized notifications.

When determining that the summary deletion designation has not been performed by the user, the processor 20 ends the second notification management process. When determining that the summary deletion designation has been performed by the user, the processor 20 shifts the process to step S36.

In step S36, the processor 20 executes a notification deletion process. In this process, the processor 20 deletes the notification for which the summary deletion designation has been performed by the user from the summarized notifications. Thus, after displaying a summary of the notifications on the display device 24, the processor 20 executes a process that deletes notifications in bulk in response to the user's instruction.

### Operation and Advantages of First Embodiment

The operation and advantages of the first embodiment will now be described.

(1-1) The processor 20 acquires multiple notifications to be summarized in response to an acquisition instruction that has been input by the user via the information processing device 11. The processor 20 acquires a summary of the notifications and displays the summary on the display device 24. After displaying the summary, the processor 20 processes the notifications in bulk in response to a bulk processing instruction that has been input by the user via the information processing device 11. Such a configuration allows a summary of multiple notifications to be checked as intended by the user and allows the notifications to be processed in bulk after displaying the summary. This reduces time and effort for checking multiple notifications and reduces time and effort for processing the displayed notifications. Thus, usability is improved.

(1-2) The processor 20 acquires, from the LLM 13A, the summary generated by the LLM 13A by inputting, into the LLM 13A, a prompt that includes the notifications and an instruction for generating the summary. In this configuration, the LLM 13A is used to acquire a highly accurate summary of multiple notifications in a simple manner. Thus, usability is improved.

(1-3) The processor 20 acquires notifications to be summarized with priority given to a notification with a relatively recent notification date and time. In this configuration, a summary of a notification with a relatively recent notification date and time is preferentially displayed. Thus, usability is improved.

(1-4) The processor 20 acquires multiple notifications to be summarized with priority given to a notification assigned to a category with a relatively high notification frequency. In this configuration, a summary of a notification assigned to a category having a relatively high notification frequency is preferentially displayed. Thus, usability is improved.

(1-5) The processor 20 acquires notifications to be summarized with more priority given to a notification assigned to a category having a relatively high activity history of the user than to a notification assigned to a category having a relatively low activity history of the user based on the user activity history. In this configuration, a summary of a notification assigned to a category having a relatively high activity history of the user is preferentially displayed. Thus, usability is improved.

(1-6) When the first service is used more frequently than the second service, the processor 20 acquires notifications to be summarized with more priority given to a notification related to the first service than to a notification related to the second service based on the user activity history. In this configuration, a summary of a notification related to a service that is used relatively frequently is preferentially displayed. Thus, usability is improved.

(1-7) The processor 20 acquires notifications to be summarized with priority given to a notification that includes data related to a reward for the user. In this configuration, a summary of a notification that includes data related to a reward for the user is preferentially displayed. Thus, usability is improved.

(1-8) The processor 20 may acquire notifications to be summarized with priority given to a notification including data related to a reward for the user that has not expired. In this configuration, a summary of a notification that includes data related to a reward for the user that has not expired is preferentially displayed. Thus, usability is improved.

(1-9) The processor 20 acquires notifications to be summarized with priority given to a notification including data related to a reward for the user that has not expired and has a relatively short remaining validity period. In this configuration, a summary of a notification that includes data related to a reward for the user that has not expired and has a relatively short remaining validity period is preferentially displayed. Thus, usability is improved.

(1-10) The processor 20 acquires notifications to be summarized with priority given to a notification in which the value of a reward provided to the user is relatively high. In this configuration, a summary of a notification in which the value of a reward provided to the user is relatively high is preferentially displayed. Thus, usability is improved.

(1-11) The processor 20 acquires notifications to be summarized with priority given to a notification that does not include data related to a reward for the user that has expired. In this configuration, a summary of a notification that does not include data related to a reward for the user that has expired is preferentially displayed. Thus, usability is improved.

(1-12) The processor 20 displays link target associated with at least one of multiple notifications to be summarized, and displays a notification indicating the link target in accordance with designation of the link target by the user. In this configuration, a notification indicating the link target is displayed from a summary of multiple notifications to be summarized as intended by the user. This allows the user to check a summary of the notifications and thus check the notifications as intended. As a result, the time and effort for checking the notifications is reduced. Thus, usability is improved.

(1-13) The processor 20 marks at least one of multiple notifications to be summarized as read in bulk. This configuration displays a summary of multiple notifications and then marks the notifications as read in bulk. This reduces time and effort for checking multiple notifications and reduces time and effort for marking multiple displayed notifications as read. Thus, usability is improved.

(1-14) The processor 20 deletes at least one of multiple notifications to be summarized in bulk. This configuration displays a summary of multiple notifications and then deletes the notifications. This reduces time and effort for checking multiple notifications and reduces time and effort for deleting multiple displayed notifications. Thus, usability is improved.

(1-15) The processor 20 acquires unread notifications as multiple notifications to be summarized. In this configuration, a summary of unread notifications is displayed. This reduces the time and effort for checking unread notifications. Thus, usability is improved.

### Second Embodiment

A second embodiment will now be described below. In the description below, the same reference numerals are given to those components that are the same as the corresponding components of the above-described embodiment. Such elements will not be described or will be briefly described.

In the second embodiment, in step S24 of Fig. 7, the processor 20 may input an extraction prompt to the LLM 13A. The extraction prompt includes a predetermined number of notifications, which is greater than the number of multiple notifications to be summarized, an extraction condition, and an extraction instruction for extracting the notifications based on the extraction condition. Thus, the processor 20 acquires multiple notifications to be summarized, which are extracted by the LLM 13A, from the LLM 13A.

Specifically, the processor 20 acquires the predetermined number of notifications. The processor 20 may acquire, from unread notifications, the predetermined number of notifications in descending order of notification date and time. The predetermined number of notifications is greater than the number of notifications to be summarized. That is, the predetermined number is two or more. For example, when the number of notifications to be summarized is four, the predetermined number of notifications is five or more and is preferably at least twice the number of the notifications. The processor 20 may acquire the predetermined number of notifications from the unread notifications.

The processor 20 generates the extraction prompt. The extraction prompt may include the predetermined number of notifications, the extraction condition, and the extraction instruction for extracting multiple notifications from the predetermined number of notifications based on the extraction condition. The predetermined number of notifications are acquired from unread notifications. Thus, the extraction condition may include at least one of the upper limit number of notifications to be acquired as a summarization target and the priority of notifications. That is, the extraction prompt may instruct to acquire the predetermined upper limit number of notifications in descending order of priority level as the notifications to be summarized. The extraction prompt may include at least one of the user attribute, the user activity history, and the notification frequency as the priority of notifications. The processor 20 sends the generated extraction prompt to the LLM server 13. Thus, the processor 20 inputs the extraction prompt into the LLM 13A.

The processor 20 receives multiple notifications from the LLM server 13 that has sent the extraction prompt. Thus, the processor 20 acquires, from the LLM 13A, multiple notifications extracted by the LLM 13A by inputting the extraction prompt into the LLM 13A according to the notification summarization instruction.

### Operation and Advantages of Second Embodiment

The operation and advantages of the second embodiment will now be described.

(2-1) The processor 20 inputs, to the LLM 13A, the extraction prompt including the predetermined number of notifications, the extraction condition, and the extraction instruction for extracting multiple notifications that satisfy the extraction condition. Thus, the processor 20 acquires multiple notifications to be summarized, which are extracted by the LLM 13A, from the LLM 13A. In this configuration, the LLM 13A is used to acquire a highly accurate summary of multiple notifications to be summarized in a simple manner. Thus, usability is improved.

### Modifications

The above-described embodiments may be modified as described below. The above-described embodiments and the following modifications can be combined if the combined modifications remain technically consistent with each other.

The processor 20 may display a linked image on the display device 24 separately from a title 61. When a linked image is designated by the user, the processor 20 may display a notification indicating the link target on the display device 24. The processor 20 does not have to display a title 61 on the display device 24.

When an image indicating a link target is designated by the user, the processor 20 may access the website of the notification sender instead of the designated notification. In this case, the processor 20 may display, on the display device 24, a confirmation image for confirming whether to permit access to the website of the notification sender.

When an image indicating a link target is designated by the user, the processor 20 may display an image related to the notification indicating the link target on the display device 24. The image related to the notification indicating the link target may be a notification text included in the notification, a notification image included in the notification, or a combination thereof. The image related to the notification indicating the link target may be part of the notification content included in the notification. In this case, the processor 20 may display an image related to the notification indicating the link target on the display device 24 with more detailed content than the summary image 60 of multiple notifications. The processor 20 may input the content related to the notification indicating the link target to the LLM 13A, separately from a summary of the notifications. The image related to the notification indicating the link target may be displayed as a popup.

A delete-all button image may be displayed on the display device 24, separately from the mark-all-as-read button 64 when the app is running. The delete-all is used to delete all the notifications received by the information processing device 11. The mark-all-as-read button 64 does not have to be displayed on the display device 24 when the app is running.

The processor 20 may execute at least one of the process that marks the notifications designated by the user, among multiple notifications displayed as a summarization target, as read in bulk and the process that marks all the notifications displayed as a summarization target as read in bulk.

The processor 20 may execute at least one of the process that deletes the notifications designated by the user, among multiple notifications displayed as a summarization target, in bulk and the process that deletes all the notifications displayed as a summarization target in bulk.

After displaying a summary of multiple notifications on the display device 24, the processor 20 may execute at least one of the process that marks the notifications as read in bulk and the process that deletes the notifications in bulk.

After displaying a summary of multiple notifications on the display device 24, the processor 20 may process notifications in bulk regardless of whether the summary is currently displayed on the display device 24.

The processor 20 may acquire a notification related to a mini app, as a notification to be summarized. The term "app" may include a super app and a mini app. The super app is an integrated app having at least one function. The super app serves as a platform of the mini app. That is, the super app provides the mini app. The mini app runs on the super app as a platform. The mini app is developed to run in the super app. The images illustrated in Figs. 3 to 5 may be shown when the super app is running. The notifications may include a notification related to the super app and a notification related to the mini app that runs on the super app as a platform.

The super app may be related to a predetermined service such as a financial service, and may centrally control multiple services. Categories such as food, shopping, and finance may be assigned to the mini app. The predetermined service may be assigned to the mini app. For example, the mini app may be related to a financial service or an electronic commerce service.

In the priority for acquiring multiple notifications to be summarized, notifications related to the super app may be prioritized over notifications related to the mini app. This allows the processor 20 to acquire multiple notifications to be summarized with more priority given to a notification related to the super app than to a notification related to the mini app.

The processor 20 may acquire notifications to be summarized with priority given to a notification with a relatively old date and time. The processor 20 may acquire notifications to be summarized regardless of the notification date and time. Instead of the time and date when the notification was issued by the notification sender, the notification date and time may be the time and date when it was received by the user.

The processor 20 may select not only an unread notification but also multiple notifications including both an unread notification and a read notification as a summarization target. That is, in addition to an unread notification, the processor 20 may acquire multiple notifications including both an unread notification and a read notification as a summarization target and display them on the display device 24. The processor 20 may acquire notifications to be summarized with priority given to an unread notification than to a read notification.

The priority of acquiring multiple notifications to be summarized may be set in any combination. The priority does not have to include at least one of the conditions of the above-described embodiment, and may include a condition other than the above-described embodiment.

The priority may be set by the user. For example, the user may set the priority with priority given to a notification for which the reward value given to the user is higher than a predetermined value.

The processor 20 may acquire a notification to be summarized based on the degree of importance associated with the notification. That is, the degree of importance may be included in the acquisition condition. The degree of importance may be set by the sender or may be set by the user.

The processor 20 may acquire a notification to be summarized, regardless of the expiration date when a reward is given to the user. The processor 20 may acquire a notification to be summarized, regardless of the reward value given to the user. The processor 20 may acquire, as a notification to be summarized, a notification that is not related to a reward to be given to the user.

The processor 20 may acquire, as a notification to be summarized, at least one notification from the predetermined number of notifications. In this case, the processor 20 may acquire a summary of at least one notification acquired as a summarization target and display the summary on the display device 24. The processor 20 may execute a process that marks at least one notification to be summarized as read. The processor 20 may execute a process that deletes at least one notification to be summarized.

The processor 20 may store a user attribute in the memory 21 and acquire it from the memory 21. The processor 20 does not have to acquire a user attribute through communication with the service server 12.

The processor 20 may store the activity history of the user in the memory 21 and acquire it from the memory 21. The processor 20 does not have to acquire the activity history of the user through communication with the service server 12.

The processor 20 does not have to acquire the notification frequency through communication with the service server 12. In this case, the processor 20 does not have to calculate the notification frequency or store it in the memory 21.

The processor 20 may divide the summarizing prompt into multiple prompts and input them into the LLM 13A. In the second embodiment, the processor 20 may divide the extraction prompt into multiple prompts and input them into the LLM 13A.

In the second embodiment, the processor 20 may input a prompt including the extraction prompt and the summarizing prompt into the LLM 13A. That is, the processor 20 may collectively perform the acquisition of multiple notifications to be summarized and the acquisition of a summary of the notifications.

The service server 12 may include the LLM 13A. In this case, the recipient of a prompt from the information processing device 11 is the service server 12. The information processing device 11 may include the LLM 13A. As described above, in the information processing device 11, the processor 20 may input a prompt to the LLM 13A. In these cases, the information processing system 10 does not have to include the LLM server 13.

In the information processing system 10, instead of the LLM 13A, the processor 20 may input an instruction into a language model having a smaller computational load, data volume, and number of model parameters than the LLM 13A. The language model may be a learning model using deep learning. In the information processing system 10, the processor 20 may acquire a summary of a notification by acquiring the wording to be summarized from the notification according to a predetermined acquisition rule. The acquisition rule may be based on the extraction condition.

The information processing system 10 may include another server in addition to the service server 12 and the LLM server 13. In this case, the other server may include some of the functions of the service server 12. The information processing system 10 may have any server configuration including one or more servers if it functions as the service server 12.

The service server 12 may include some of the functions of the information processing device 11. The service server 12 may include some of the functions of the information processing device 11 except for the display function of the information processing device 11. As a result, the service server 12 performs control to display an image on a user terminal device. In such a case, the service server 12 may function as an information processing device.

The information processing device 11 may have some of the functions of the service server 12. The information processing device 11 may have all the functions of the service server 12. In this case, the information processing system 10 does not have to include the service server 12.

The information processing device 11 simply needs to be configured to include at least one processor 20 and at least one memory 21. The information processing system 10 simply needs to be configured to include at least one processor, such as the processor 20 or 30, and at least one memory, such as the memory 21 or 31.

The expression "at least any" as used herein means "one or multiple" of desired options. As an example, the phrase "at least any" as used herein means only one option if the number of options is two, or both of the two options. As another example, the expression "at least any" used herein means only one option or a combination of any two or more options if the number of options is three or more.

### Clauses

Technical concepts that can be understood from each of the above embodiments and modifications will now be described.

[Clause 1] An information processing device, including:
at least one memory configured to store a program; and
at least one processor configured to execute a process based on the program, wherein
the at least one processor is configured to execute:
   acquiring notifications to be summarized;
   acquiring a summary of the notifications in response to an instruction from a user;
   displaying the summary of the notifications; and
   processing, after displaying the summary of the notifications, the notifications in bulk in response to an instruction from the user.

[Clause 2] The information processing device according to clause 1, where
the acquiring the summary of the notifications includes acquiring, from a large language model, the summary of the notifications generated by the large language model by inputting, into the large language model, a prompt that includes the notifications and an instruction for generating the summary of the notifications.

[Clause 3] The information processing device according to clause 1 or 2, where
the acquiring the notifications includes acquiring, from a large language model, the notifications generated by the large language model by inputting, into the large language model, a prompt that includes a predetermined number of notifications, an acquisition condition for acquiring the notifications, and an instruction for acquiring the notifications from the predetermined number of notifications based on the acquisition condition, where the predetermined number of notifications is greater than the number of the notifications.

[Clause 4] The information processing device according to any one of clauses 1 to 3, where
the acquiring the notifications includes acquiring the notifications with priority given to a notification with a relatively recent date and time.

[Clause 5] The information processing device according to any one of clauses 1 to 4, where
the acquiring the notifications includes acquiring the notifications with priority given to a notification assigned to a category with a relatively high notification frequency.

[Clause 6] The information processing device according to any one of clauses 1 to 5, where
the acquiring the notifications includes acquiring the notifications with more priority given to a notification assigned to a category with a relatively high activity frequency of the user than to a notification assigned to a category with a relatively low activity frequency of the user based on an activity history of the user.

[Clause 7]. The information processing device according to any one of clauses 1 to 6, where
the acquiring the notifications includes acquiring the notifications with more priority given to a notification related to a first service than to a notification related to a second service when the first service is used more frequently than the second service.

[Clause 8] The information processing device according to any one of clauses 1 to 7, where
the acquiring the notifications includes acquiring the notifications with priority given to a notification that includes data related to a reward for the user.

[Clause 9] The information processing device according to any one of clauses 1 to 8, where
the acquiring the notifications includes acquiring the notifications with priority given to a notification that includes data related to a reward for the user that has not expired.

[Clause 10] The information processing device according to any one of clauses 1 to 9, where
the acquiring the notifications includes acquiring the notifications with priority given to a notification that includes data related to a reward for the user that has not expired and has a relatively short remaining validity period.

[Clause 11] The information processing device according to any one of clauses 1 to 10, where
the acquiring the notifications includes acquiring the notifications with priority given to a notification in which the value of a reward provided to the user is relatively high.

[Clause 12] The information processing device according to any one of clauses 8 to 11, where
the acquiring the notifications includes acquiring the notifications with priority given to a notification that does not include data related to a reward for the user that has expired.

[Clause 13] The information processing device according to any one of clauses 1 to 12, where
the displaying the summary of the notifications includes displaying a link target associated with at least one of the notifications, and
the at least one processor is configured to display a notification indicating the link target in accordance with designation of the link target by the user.

[Clause 14] The information processing device according to any one of clauses 1 to 13, where
the processing the notifications in bulk includes marking the notifications as read in bulk.

[Clause 15] The information processing device according to any one of clauses 1 to 14, where
the processing the notifications in bulk includes deleting the notifications in bulk.

[Clause 16] The information processing device according to any one of clauses 1 to 15, where
the acquiring the notifications includes acquiring an unread notification as the notifications.

[Clause 17] An information processing system, including:
at least one memory configured to store a program; and
at least one processor configured to execute a process based on the program, wherein
the at least one processor is configured to execute:
   acquiring notifications to be summarized;
   acquiring a summary of the notifications in response to an instruction from a user;
   displaying the summary of the notifications; and
processing, after displaying the summary of the notifications, the notifications in bulk in response to an instruction from the user.

[Clause 18] An information processing method, including:
acquiring, by at least one processor, notifications to be summarized;
acquiring, by the at least one processor, a summary of the notifications in response to an instruction from a user;
displaying, by the at least one processor, the summary of the notifications; and
processing, after displaying the summary of the notifications, by the at least one processor, the notifications in bulk in response to an instruction from the user.

[Clause 19] A program that causes at least one processor to execute:
acquiring notifications to be summarized;
acquiring a summary of the notifications in response to an instruction from a user;
displaying the summary of the notifications; and
processing, after displaying the summary of the notifications, the notifications in bulk in response to an instruction from the user.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An information processing system (10), comprising:
at least one memory (21) configured to store a program (26); and
at least one processor (20) configured to execute a process based on the program (20), wherein
the at least one processor (20) is configured to execute:
acquiring notifications to be summarized in response to an acquisition instruction that has been input by a user via a terminal device;
acquiring a summary of the notifications;
displaying the summary on the terminal device; and
processing, after displaying the summary on the terminal device, the notifications in bulk in response to a bulk processing instruction that has been input by the user via the terminal device.

2. The information processing system (10) according to claim 1, wherein
the acquiring the summary includes acquiring, from a large language model, the summary generated by the large language model by inputting, into the large language model, a prompt that includes the notifications and an instruction for generating the summary.

3. The information processing system (10) according to claim 1 or 2, wherein
the acquiring the notifications includes acquiring, from a large language model, the notifications extracted by the large language model by inputting, into the large language model, a prompt that includes a predetermined number of notifications, an extraction condition for extracting the notifications, and an extraction instruction for extracting the notifications from the predetermined number of notifications based on the extraction condition, wherein the predetermined number of notifications is greater than the number of the notifications.

4. The information processing system (10) according to any one of claims 1 to 3, wherein
the at least one processor (20) is configured to acquire the notifications in accordance with at least one priority criterion, and
the at least one priority criterion includes a recency of the notification date and time.

5. The information processing system (10) according to any one of claims 1 to 4, wherein
the at least one processor (20) is configured to acquire the notifications in accordance with at least one priority criterion, and
the at least one priority criterion includes:
prioritizing a notification assigned to a category with a relatively high notification frequency; or
prioritizing a notification assigned to a category with a relatively high activity frequency of the user over a notification assigned to a category with a relatively low activity frequency of the user based on an activity history of the user.

6. The information processing system (10) according to any one of claims 1 to 5, wherein
the at least one processor (20) is configured to acquire the notifications in accordance with at least one priority criterion, and
the at least one priority criterion includes prioritizing a notification related to a first service over a notification related to a second service when the first service is used more frequently than the second service.

7. The information processing system (10) according to any one of claims 1 to 6, wherein
the at least one processor (20) is configured to acquire the notifications in accordance with at least one priority criterion, and
the at least one priority criterion includes:
the condition that a notification includes data related to a reward for the user;
the condition that a notification does not include data related to a reward that has expired;
the condition that a notification includes data related to a reward that has not expired; or
the condition that a notification includes data related to a reward that has a relatively short remaining validity period.

8. The information processing system (10) according to any one of claims 1 to 7, wherein
the at least one processor (20) is configured to acquire the notifications in accordance with at least one priority criterion, and
the at least one priority criterion includes the condition that a reward value provided to the user is relatively high.

9. The information processing system (10) according to any one of claims 1 to 8, wherein
the at least one processor (20) is configured to execute:
acquiring the notifications in descending order of priority level; and
calculating the priority level based on the number of satisfied ones of multiple priority criteria.

10. The information processing system (10) according to any one of claims 1 to 8, wherein
the at least one processor (20) is configured to acquire the notifications in descending order of priority level in accordance with priority criteria,
a coefficient is set for each of the priority criteria, and
the at least one processor (20) is further configured to calculate the priority level by aggregating coefficients of satisfied ones of the priority criteria.

11. The information processing system (10) according to any one of claims 1 to 10, wherein
the summary includes a link target associated with at least one of the notifications, and
the at least one processor (20) is configured to display, on the terminal device, a notification indicating the link target designated by the user via the terminal device.

12. The information processing system (10) according to any one of claims 1 to 11, wherein
the processing the notifications in bulk includes:
marking the notifications as read in bulk; or
deleting the notifications in bulk.

13. The information processing system (10) according to any one of claims 1 to 12, wherein
the notifications include an unread notification that has been sent from a service server to the terminal device and remains unopened by the user.

14. An information processing method, comprising:
acquiring, by at least one processor (20), notifications to be summarized in response to an acquisition instruction that has been input by a user via a terminal device;
acquiring, by the at least one processor (20), a summary of the notifications;
displaying, by the at least one processor (20), the summary on the terminal device; and
processing, after displaying the summary on the terminal device, by the at least one processor (20), the notifications in bulk in response to a bulk processing instruction that has been input by the user via the terminal device.

15. A program that causes at least one processor (20) to execute:
acquiring notifications to be summarized in response to an acquisition instruction that has been input by a user via a terminal device;
acquiring a summary of the notifications;
displaying the summary on the terminal device; and
processing, after displaying the summary on the terminal device, the notifications in bulk in response to a bulk processing instruction that has been input by the user via the terminal device.
